# FASCICULE DE BREVET EUROPEEN

(11) **EP 0 733 587 B1**
(45) Date de publication et mention de la délivrance du brevet: **25.02.1998**
(21) Numéro de dépôt: 95440011.5
(22) Date de dépôt: 23.03.1995
(51) Int. Cl.: B67C 7/00, B65G 25/02

(54) **Dispositif de transfert de bouteilles**
Vorrichtung zum Fortbewegen von Flaschen
Bottle transferring device

(43) Date de publication de la demande: 25.09.1996
(73) Titulaire: Topczewski, Daniel, F-51200 Epernay (FR)
(72) Inventeur: Topczewski, Daniel, F-51200 Epernay (FR)
(74) Mandataire: Arbousse-Bastide, Jean-Claude Philippe

(56) Documents cités:
- FR-A- 2 531 044
- FR-A- 2 630 425

## Description

La présente invention a pour objet, dans le domaine de l'élaboration des vins champagnisés, un dispositif de transfert de bouteilles pour machine automatique à dégorger, vidanger, doser et remplir.

On connaît déjà des machines permettant de réaliser automatiquement et successivement les opérations de dégorgement, de vidange, de dosage et de remplissage que nécessite l'élaboration d'un vin champagnisé.

Ainsi le document FR-A-2.630.425, au nom du demandeur, décrit une telle machine, dont les avantages sont d'être compacte et d'autoriser de petites cadences tout en étant entièrement automatique. Ladite machine comporte un poste de dégorgement, et, disposés sur un support, des becs de vidange, de dosage et de remplissage qui viennent s'adapter successivement sur des bouteilles inclinées qui défilent en cadence. Le transfert des bouteilles est réalisé au moyen de plaques articulées entre elles et montées en boucle, chacune des plaques comportant des moyens de calage d'une bouteille, le déplacement desdites plaques se faisant pas à pas.

Le dispositif de transfert décrit dans ce document présente toutefois un inconvénient dû au fait que les opérations débutent par le dégorgement des bouteilles, lequel nécessite au préalable l'enlèvement de la capsule métallique et d'un obturateur en matière plastique appelé communément "bidule". Or il est fréquent que, sous la pression, la capsule et/ou le bidule sautent et tombent sur les plaques de transfert, s'insérant entre elles en provoquant le blocage et l'arrêt du transfert.

La présente invention a pour but de proposer un dispositif de transfert des bouteilles qui permet de remédier à cet inconvénient.

Le dispositif de transfert de bouteilles selon la présente invention se caractérise essentiellement en ce qu'il comprend, en regard d'un support portant des becs de vidange, de dosage et de remplissage, un plateau mobile en déplacement alternatif parallèlement audit support et perpendiculairement au sens d'introduction desdits becs dans les bouteilles, ledit plateau comportant deux paires parallèles de planches accolées l'une à l'autre et positionnées sur un chant longitudinal perpendiculairement audit plateau, l'une des planches de chacune desdites paires étant fixe et solidaire dudit plateau, tandis que l'autre planche est mobile en déplacement contre la planche fixe perpendiculairement audit plateau, les planches mobiles comportant sur leur bord supérieur des découpes régulièrement espacées, d'entraxe égal à celui des becs, permettant le maintien de bouteilles lorsque lesdites planches mobiles sont en position haute, leur bord supérieur étant légèrement en dessous du bord supérieur des planches fixes lorsque lesdites planches mobiles sont en position basse .

Selon une caractéristique additionnelle du dispositif selon l'invention, le déplacement des planches mobiles est assuré par un vérin solidaire du plateau et relié auxdites planches par l'intermédiaire de tiges traversant le dit plateau.

Selon une autre caractéristique additionnelle du dispositif selon l'invention, le déplacement du plateau et du vérin actionnant les planches mobiles est assuré par un vérin horizontal solidaire du bâti sur lequel coulisse ledit plateau.

Les avantages et les caractéristiques de la présente invention ressortiront plus clairement de la description qui suit et qui se rapporte au dessin annexé, lequel en représente un mode de réalisation non limitatif.

Dans le dessin annexé :
- la figure 1 représente une vue en coupe transversale d'un dispositif selon l'invention.
- la figure 2 représente une vue partielle en perspective de ce même dispositif.
- les figures 3a à 3f représentent des vues schématiques partielles, vues de dessous, des étapes de fonctionnement du même dispositif.

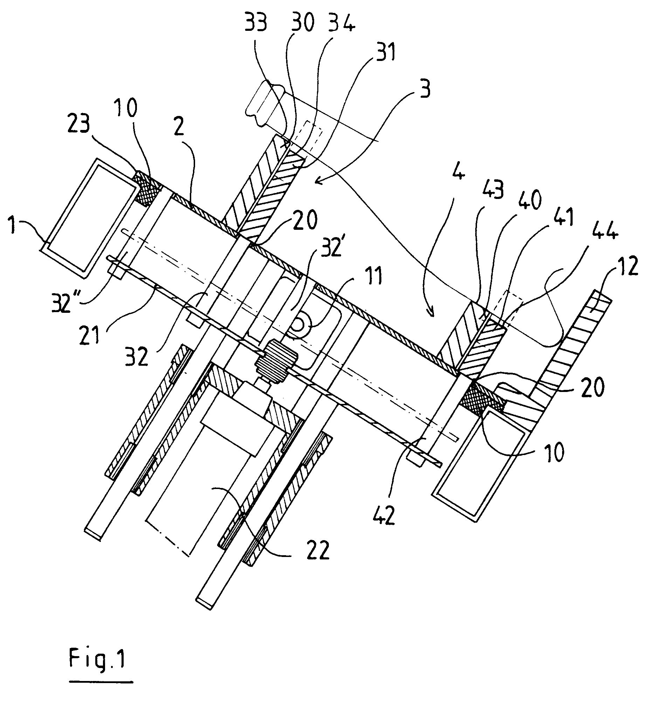

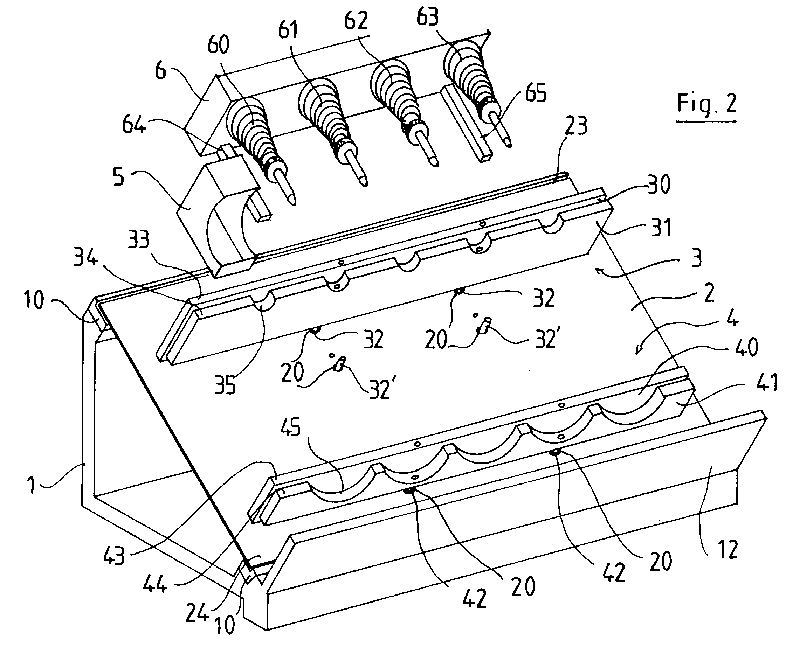

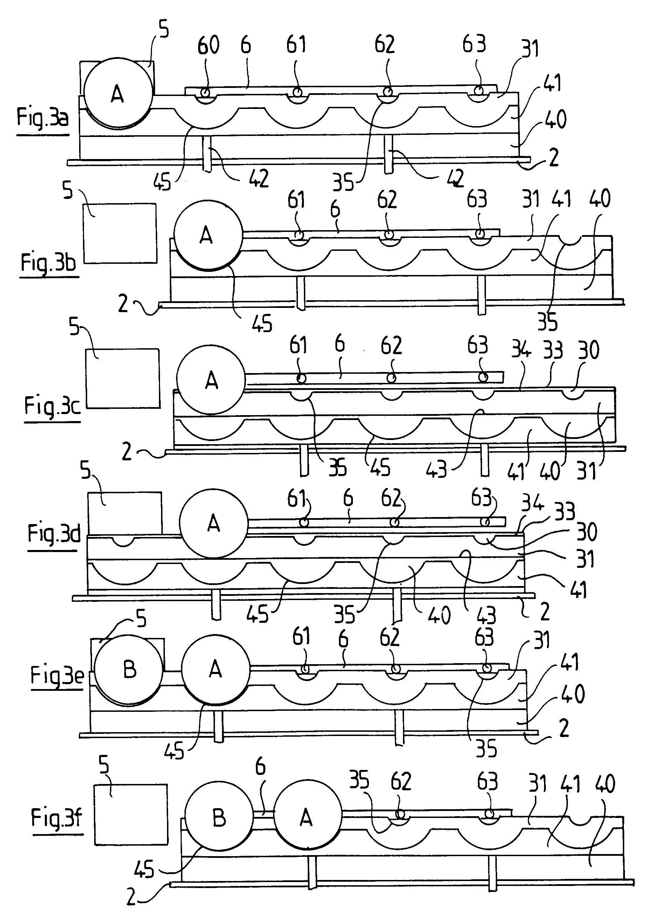

Si on se réfère d'abord à la figure 1 on peut voir qu'un dispositif selon l'invention comporte un bâti 1 sur lequel peut se déplacer en translation un plateau 2, par l'intermédiaire de patins 10 et sous l'action d'un vérin horizontal double effet 11 solidaire du bâti 1, le déplacement dudit plateau 2 s'effectuant longitudinalement dans un plan oblique.

Le plateau 2 comporte deux paires parallèles 3 et 4 de planches respectivement 30 et 31, 40 et 41, positionnées longitudinalement, parallèlement au sens de déplacement du plateau 2, et se dressant sur chant perpendiculairement à celui-ci, les planches 30 et 31 étant, du fait de l'inclinaison du plateau 2, placées au-dessus des planches 40 et 41.

Les planches 30 et 40 des paires 3 et 4 sont solidaires fixement du plateau 2, alors que les planches 31 et 41 sont solidaires de tiges, respectivement 32 et 42, dont une seule par planche est visible sur la figure, qui traversent perpendiculairement le plateau 2 par des orifices 20 pratiqués dans ce dernier, et qui sont solidaires par leur extrémité inférieure d'une platine 21, mobile en rapprochement ou en éloignement du plateau 2 sous l'action d'un vérin double effet 22 lui-même solidarisé par des moyens appropriés au plateau 2.

Si on se réfère maintenant à la figure 2 on peut voir que le long du bord supérieur 23 du plateau 2 sont disposés, d'une part un poste de dégorgement 5, et d'autre part un support 6 portant un bec de vidange 60, un bec de dosage 61 et deux becs de remplissage 62 et 63, le support 6 étant mobile en déplacement alternatif sur des rails 64 et 65 solidaires du bâti 1, parallèlement au plan du plateau 2 et perpendiculairement aux planches 30, 31, 40 et 41.

Le poste de dégorgement 5 et les becs 60, 61, 62 et 63 sont alignés et régulièrement espacés d'une distance correspondant à l'amplitude de déplacement du plateau 2 sous l'effet du vérin 11, non représenté sur cette figure.

Le bord supérieur 33, 43 des planches fixes 30, 40, est rectiligne, alors que le bord supérieur 34 de la planche mobile supérieure 31 comporte cinq découpes 35 permettant de maintenir les goulots des bouteilles, et que le bord supérieur 44 de la planche mobile inférieure 41 comporte cinq découpes 45 permettant de maintenir le corps des mêmes bouteilles, le bâti 1 comportant d'autre part, le long du bord inférieur 24 du plateau 2, un rebord 12 perpendiculaire à ce dernier sur lequel prennent appui et peuvent glisser longitudinalement les culs des bouteilles.

Lorsque les planches mobiles 31 et 41 sont en position haute, les fonds des découpes 35 et 45 sont légèrement au-dessus des bords 33 et 43 des planches fixes 30 et 40, tandis que lorsque les planches mobiles 31 et 41 sont en position basse, les bords supérieurs 33 et 43 des planches fixes 30 et 40 sont légèrement au-dessus de leurs bords, respectivement 34 et 44, comme on peut le voir sur la figure 1 où la platine 21 et les planches mobiles 31 et 41 sont également représentées en position haute en traits discontinus.

Il convient de remarquer que le plateau 2 comporte différents emplacements pour la solidarisation des planches 30 et 31, en fonction de la taille des bouteilles, destinés au tratement notamment des magnums et des demi-bouteilles, le dispositif comportant à cet effet, pour les demi-bouteilles, des tiges 32' et pour les magnums des tiges 32'' visibles sur la figure 1.

Les étapes de fonctionnement du dispositif selon l'invention sont décrites ci-après à l'appui des figures 3a à 3f, sur lesquelles on peut voir le poste de dégorgement 5 et le support 6 avec les becs 60, 61, 62 et 63, ainsi que le plateau 2, les tiges 42, les planches mobiles 31 et 41 et les planches fixes 30 et 40.

La première étape de fonctionnement du dispositif, lors de l'opération de dégorgement, est représentée sur la figure 3a, où les planches mobiles 31 et 41 sont en position haute et les premières découpes 35 et 45 en regard du poste de dégorgement 5, une bouteille A reposant sur lesdites découpes.

La deuxième étape, correspondant à l'opération de vidange, est représentée sur la figure 3b : après le dégorgement de la bouteille A, le plateau 2 se déplace de manière à placer la bouteille A en regard du bec de vidange 60, puis le support 6 est abaissé et le bec de vidange 60 pénètre dans la bouteille A.

Tandis que la vidange s'opère, les planches 31 et 41 s'abaissent sous l'action du vérin 22, non représenté, la bouteille A étant alors maintenue par le bec de vidange 60 en appui contre le rebord 12, et pouvant reposer sur les bords supérieurs 33 et 43 des planches fixes respectivement 30 et 40 (figure 3c).

Le plateau 2 reprend ensuite sa position initiale sans déplacer la bouteille A (figure 3d).

Les planches mobiles 31 et 41 reviennent alors à leur position haute, la bouteille A vidangée se trouvant ainsi maintenue dans les deuxièmes découpes 35 et 45, tandis qu'une bouteille B est placée dans les premières découpes 35 et 45 en regard du poste de dégorgement 5 (figure 3e).

Après le dégorgement de la bouteille B, le support 6 remonte et le bec de vidange 60 sort de la bouteille A, le plateau 2 est déplacé pour positionner la bouteille A en regard du bec de dosage 61 et la bouteille B en regard du bec de vidange 60 (figure 3f), et ainsi de suite jusqu'à la mise à niveau de la bouteille A par le deuxième bec de remplissage 63, après quoi la bouteille est évacuée pour être bouchée.

Le dispositif selon l'invention permet ainsi le transfert des bouteilles d'un poste à un autre sans aucun risque qu'une capsule ou un bidule ne tombe entre deux pièces en mouvement, les planches fixes 30 et 40 étant placées au-dessus des planches mobiles respectivement 31 et 41 afin que les capsules ou les bidules ne puissent s'intercaler entre les planches mobiles 31 et 41 et le plateau 2.

## Revendications

1. Dispositif de transfert de bouteilles pour machine automatique à dégorger, vidanger doser et remplir, destiné notamment à l'élaboration des vins champagnisés, caractérisé en ce qu'il comprend, monté sur un bâti (1), en regard d'un support (6) portant des becs de vidange (60), de dosage (61) et de remplissage (62, 63), un plateau (2) mobile en déplacement alternatif parallèlement audit support (6) et perpendiculairement au sens d'introduction desdits becs (60, 61, 62, 63) dans les bouteilles, le long d'un rebord (12) que comporte longitudinalement en partie basse ledit bâti (1), ledit plateau (2) comportant deux paires parallèles (3, 4) de planches (30, 31, 40, 41) accolées l'une à l'autre et positionnées sur un chant longitudinal perpendiculairement audit plateau (2), l'une des planches (30, 40) de chacune desdites paires (3, 4) étant solidaire dudit plateau (2), tandis que l'autre planche (31, 41) est mobile en déplacement contre la planche fixe (30, 40) perpendiculairement audit plateau (2), les planches mobiles (31, 41) comportant sur leur bord supérieur (34, 44) des découpes (35, 45) régulièrement espacées, d'entraxe égal à celui des becs (60, 61, 62, 63), permettant le maintien de bouteilles lorsque lesdites planches mobiles (31, 41) sont en position haute, leur bord supérieur (34, 44) étant légèrement en dessous du bord supérieur (33, 43) des planches fixes (30, 40) lorsque lesdites planches mobiles (31, 41) sont en position basse.

2. Dispositif selon la revendication 1 caractérisé en ce que le déplacement des planches mobiles (31, 41) est assuré par un vérin double effet (22) solidaire du plateau (2) relié auxdites planches (31, 41) par l'intermédiaire de tiges (32, 32', 32'', 42) traversant celui-ci par des orifices (20).

3. Dispositif selon la revendication 1 ou la revendication 2 caractérisé en ce que le déplacement du plateau (2) est assuré par un vérin double effet horizontal (11) solidaire du bâti (1) sur lequel coulisse ledit plateau (2).

4. Dispositif selon l'une quelconque des revendications précédentes caractérisé en ce que dans chaque paire (3, 4) de planches (30, 31, 40, 41) la planche fixe (30, 40) est placée au-dessus de la planche mobile (31, 41).

5. Dispositif selon l'une quelconque des revendications précédentes caractérisé en ce que la paire (3) de planches (30, 31) supérieures peut être placée en différents endroits sur le plateau (2) en fonction de la taille des bouteilles à traiter.

## Claims

1. Bottle transfer device for a cleaning, draining, dosing and filling automatic machine for working off champagnized wines, characterised in that it includes mounted on a frame (1) opposite a support (6) carrying draining (60), dosing (61) and filling (62, 63) nozzles, a plate (2) able to move alternately parallel to said support (6) and perpendicular to the introduction direction of said nozzles (60,61,62,63) into the bottles along an edge (12) which said frame (1) comprises longitudinally at the lower portion, said plate (2) comprising two parallel pairs (3, 4) of planks (30,31,40,41) glued to each other and positioned on a longitudinal narrow edge perpendicular to said plate (2), one of the planks (30, 40) of each of said pairs (3, 4) being integral with said plate (2), whereas the other plank (31, 41) is able to move against the fixed plank (30, 40) perpendicular to said plate (2), the mobile planks (31, 41) comprising on their upper edge (34, 44) regularly spaced cuts (35, 45) with a centre distance of axes equal to that of the nozzles (60, 61, 62, 63) enabling the bottles to be supported when said mobile planks (31, 41) are in the upper position, their upper edge (34, 44) being slightly below the upper edge (33, 43) of the fixed planks (30, 40) when said mobile planks (31, 41) are in the lower position.

2. Device according to claim 1, characterised in that the moving of the mobile planks (31, 41) is ensured by a twin-effect jack (22) integral with the plate (2) connected to said planks (31, 41) by means of rods (32, 32', 32'', 42) traversing the latter via orifices (20).

3. Device according to claim 1 or 2, characterised in that the movement of the plate (2) is ensured by a horizontal twin-effect jack (11) integral with the frame (1) on which said plate (2) slides.

4. Device according to any one of the preceding claims, characterised in that in each pair (3, 4) of planks (30, 31, 40, 41), the fixed plank (30, 40) is placed above the mobile plank (31, 41).

5. Device according to any one of the preceding claims, characterised in that the pair (3) of the upper planks (30, 31) can be placed at different locations on the plate (2) according to the size of the bottles to be treated.

## Patentansprüche

1. Flaschenfördervorrichtung für insbesondere bei der Herstellung von Schaumwein verwendete automatische Spül-, Entleer, Dosier- und Befüllmaschinen, dadurch gekennzeichnet, daß sie eine auf einem Rahmengestell (1) gegenüber einer Halterung (6) mit Düsen zum Entleeren (60), Dosieren (61) und Befüllen (62, 63) eine sich parallel zur Halterung (6) und senkrecht zur Einführrichtung der Düsen (60, 61, 62, 63) in die Flaschen sowie entlang einer Randplatte (12) auf der Unterkante des Rahmengestells (1) hin und her bewegende Tragplatte (2) besitzt, die ihrerseits mit zwei parallel zueinander verlaufenden Paaren (3, 4) von Platten (30, 31 ; 40, 41) versehen ist, die hochkant in Längsrichtung und senkrecht zur Tragplatte (2) ausgerichtet sind, wobei jeweils eine Platte (30, 40) der beiden Paare (3, 4) fest mit der Tragplatte (2) verbunden ist, während die andere Platte (31, 41) sich gegenüber der festen Platte (30, 40) frei und senkrecht zur Tragplatte (2) verlagern kann und auf der Oberkante (34, 44) in regelmäßigen Abständen und achsparallel zur Mittelachse der Düsen (60, 61, 62, 63) angeordnete Ausschnitte (35, 45) aufweist, um die Flaschen festzuhalten, wenn sich die beweglichen Platten (31, 41) in der oberen Stellung befinden, während deren Oberkante leicht unter der der festen Platten (30, 40) liegen, wenn sich die beweglichen Platten (31, 41) in der unteren Stellung befinden.

2. Vorrichtung nach Patentanspruch 1, dadurch gekennzeichnet, daß die Verlagerung der beweglichen Platten (31, 41) mit einem in beiden Richtungen arbeitenden, fest mit der Tragplatte (2) verbundenen Druckzylinder (22) erfolgt, der mit den beweglichen Platten (31, 41) über Stangen (32, 32' ; 32'', 42) verbunden ist die durch entsprechende Öffnungen (20) in der Tragplatte (2) hindurchgeführt werden können.

3. Vorrichtung nach Patentanspruch 1, dadurch gekennzeichnet, daß die Verlagerung der Tragplatte (2) mit einem waagrecht in beiden Richtungen arbeitenden, fest mit dem Rahmengestell (1) verbundenen Druckzylinder (11) erfolgt.

4. Vorrichtung nach einem der obigen Patentansprüche, dadurch gekennzeichnet, daß bei jedem Paar (3,4) der Platten (30, 31 ; 40, 41) die feststehende Platte (30, 40) jeweils über der beweglichen Platte (31, 41) angeordnet ist.

5. Vorrichtung nach einem der obigen Patentansprüche, dadurch gekennzeichnet, daß das Paar (3) mit den obenliegenden Platten (30, 31) je nach Größe der Flaschen an verschiedenen Stellen auf der Tragplatte (2) angebracht werden kann.
